# EUROPEAN PATENT APPLICATION

(11) **EP 4 546 867 A1**
(43) Date of publication of application: **30.04.2025**
(21) Application number: 23826417.0
(22) Date of filing: 20.06.2023
(51) Int. Cl.: H04W 36/00

(54) **METHOD EXECUTED BY USER EQUIPMENT, AND USER EQUIPMENT**

(30) Priority: 21.06.2022 CN 202210707951
(71) Applicant: Sharp Kabushiki Kaisha, Sakai City, Osaka 590-8522 (JP)
(72) Inventor: CHANG, Ningjuan, Pudong, Shanghai 201206 (CN); LIU, Renmao, Pudong, Shanghai 201206 (CN)
(74) Representative: Müller Hoffmann & Partner
(86) International application number: PCT/CN2023/101361
(87) International publication number: WO 2023/246770

(57) **Abstract**

According to the present invention, provided is a method performed by a user equipment (UE), including: receiving a radio resource control (RRC) message, i.e., a primary secondary cell group cell (PSCell) change command, including reconfiguration with sync for a secondary cell group (SCG); determining whether the RRC message includes an indication of SCG deactivation; and if the RRC message does not include an indication of SCG deactivation, performing a successful PSCell change report (SPCR) determination operation upon successfully completing random access triggered by the reconfiguration with sync for the SCG.

## Description

### TECHNICAL FIELD

The present invention relates to the technical field of wireless communications. More specifically, the present invention relates to a method for reporting information related to a primary secondary cell group cell in the case of dual connectivity, and a corresponding user equipment.

### BACKGROUND

At the 3rd Generation Partnership Project (3GPP) RAN#94e plenary meeting held in December 2021, a new study item on Release 18 technology standards was approved (see Non-Patent Document: RP-213553: New WID on further enhancement of data collection for Self-Organizing Networks (SON)/Minimization of Drive Tests (MDT) in NR and EN-DC). The research objective of this item is to further enhance a network data collection procedure in an NR system based on Release 17 so as to better achieve the objective of a self-organization, self-optimization network and minimization of drive tests. One of the specific technologies studied is to implement information reporting in a scenario in which a primary secondary cell group cell (PSCell) is successfully changed.

### SUMMARY

In order to address at least part of the aforementioned issues, the objective of the present invention is to provide a solution to the issue of how to implement PSCell information reporting in a next generation radio access (NR) system. More specifically, the present invention provides a solution to the issue of how to record PSCell change information after a PSCell change procedure is successfully performed in a scenario in which a secondary cell group (SCG) is deactivated when a user equipment (UE) is configured with dual connectivity (DC) in an NR system.

According to the present invention, provided is a method performed by a user equipment (UE), comprising: receiving a radio resource control (RRC) message, i.e., a primary secondary cell group cell (PSCell) change command, comprising reconfiguration with sync for a secondary cell group (SCG); determining whether the RRC message comprises an indication of SCG deactivation; and if the RRC message does not comprise an indication of SCG deactivation, performing a successful PSCell change report (SPCR) determination operation upon successfully completing random access triggered by the reconfiguration with sync for the SCG.

Preferably, the method further comprises: if the RRC message comprises an indication of SCG deactivation, skipping performing an SPCR-related operation.

Preferably, the method further comprises: if the RRC message comprises an indication of SCG deactivation, performing the SPCR determination operation at any time in an RRC reconfiguration procedure.

In addition, according to the present invention, provided is a method performed by a user equipment (UE), comprising: receiving a radio resource control (RRC) message, i.e., a primary secondary cell group cell (PSCell) change command, comprising reconfiguration with sync for a secondary cell group (SCG); determining whether the reconfiguration with sync for the SCG has triggered random access; and if the reconfiguration with sync for the SCG has triggered random access, performing a successful PSCell change report (SPCR) determination operation upon successfully completing the random access triggered by the reconfiguration with sync for the SCG.

Preferably, the method further comprises: if the reconfiguration with sync for the SCG has not triggered random access, skipping performing an SPCR-related operation.

Preferably, the method further comprises: if the reconfiguration with sync for the SCG has not triggered random access, performing the SPCR determination operation at any time in an RRC reconfiguration procedure.

Preferably, during or before the reception of the PSCell change command, the method further comprises: receiving, from a network side, an RRC message comprising an SPCR configuration.

Preferably, the method further comprises: when it is determined that one or more SPCR triggering conditions are satisfied, recording corresponding SPCR information in a UE variable related to an SPCR.

Preferably, the SPCR information comprises at least one of the following: source PSCell information of a PSCell change procedure, target PSCell information, a neighboring cell measurement result, a triggering cause of the SPCR, associated primary cell (PCell) information, a triggering condition corresponding to the triggering cause, and indication information indicating whether the SPCR configuration is configured by a master node (MN) or a secondary node (SN).

Furthermore, according to the present invention, provided is a user equipment, comprising: a processor; and a memory, having instructions stored therein, wherein the instructions, when run by the processor, perform the above method.

The present invention can effectively implement reporting of PSCell information in an NR system, and more specifically, effectively implement recording of PSCell change information after a PSCell change procedure is successfully performed in a scenario in which an SCG is deactivated when UE is configured with dual connectivity in the NR system.

### BRIEF DESCRIPTION OF THE DRAWINGS

In order for those skilled in the art to fully understand the present invention and advantages thereof, the following description is provided in conjunction with the accompanying drawings.
FIG. 1 is a flowchart showing a method performed by a user equipment according to Embodiment 1 of the present invention.
FIG. 2 is a flowchart showing a method performed by a user equipment according to Embodiment 2 of the present invention.
FIG. 3 is a flowchart showing a method performed by a user equipment according to Embodiment 3 of the present invention.
FIG. 4 is a flowchart showing a method performed by a user equipment according to Embodiment 4 of the present invention.
FIG. 5 is a block diagram showing a user equipment (UE) according to the present invention.

### DETAILED DESCRIPTION

According to the following detailed description of exemplary embodiments of the present invention made in conjunction with the accompanying drawings, other aspects, advantages, and prominent features of the present invention will become apparent to those skilled in the art.

In the present invention, the terms "include" and "comprise" and derivatives thereof mean inclusion instead of limitation. The term "or" has an inclusive meaning and means "and/or".

In the present specification, the following various embodiments for describing the principles of the present invention are merely illustrative, and should not be interpreted in any way as limiting the scope of the disclosure. The following description, which references the accompanying drawings, is used to facilitate full understanding of the exemplary embodiments of the present invention as defined by the claims and equivalents thereof. The following description includes a variety of specific details to facilitate understanding, but these details should be considered merely exemplary. Therefore, those of ordinary skill in the art should recognize that various changes and modifications may be made to the embodiments described herein without departing from the scope and spirit of the present invention. In addition, descriptions of known functions and structures are omitted for clarity and simplicity. In addition, the same reference numerals are used for similar functions and operations throughout the accompanying drawings.

A plurality of embodiments according to the present invention are specifically described below by using a Long Term Evolution (LTE)/NR mobile communication system and subsequent evolved versions thereof as an exemplary application environment. However, it is to be noted that the present invention is not limited to the following implementations, but may be applied to other wireless communications systems. If not particularly specified, the concept of a cell and the concept of a base station are interchangeable in the present invention. An LTE system may also refer to a 5G LTE system and a post-5G LTE system (such as an LTE system referred to as an eLTE system or an LTE system that can be connected to a 5G core network). In addition, the LTE can be replaced with an evolved universal terrestrial radio access (E-UTRA) or an evolved universal terrestrial radio access network (E-UTRAN). In the present invention, a PSCell change refers to a primary secondary cell group cell change initiated by a network side, the change including an inter-cell primary secondary cell group cell change and an intra-cell primary secondary cell group cell change. That is, a PSCell of a UE is changed from a source PSCell to a target PSCell, where the source PSCell and the target PSCell may be the same cell or different cells. In this procedure, a security key or a security algorithm for access stratum security may or may not be updated accordingly. The security includes encryption and decryption and integrity protection. The source PSCell may also be referred to as a source secondary node, a source secondary cell group (SCG), a source beam, a source transmission point (TRP), or a source cell. The target PSCell may also be referred to as a target secondary node, a target beam, a target transmission point, a target secondary cell group (SCG), or a target cell. The PSCell change command described in the present invention is used to trigger the UE to perform a PSCell change. In an NR system, the PSCell change command is an RRCReconfiguration message including a reconfiguration with sync (Reconfigurationwithsync) information element, or rather, the PSCell change command is an RRCReconfiguration message including a reconfiguration with sync (Reconfigurationwithsync) information element for an SCG. In this case, the PSCell change may also be referred to as a reconfiguration with sync for an SCG or a reconfiguration with sync for a PSCell. The reconfiguration with sync information element may include configuration information of the target cell, for example, a target cell identifier, a target cell frequency, common configurations of the target cell such as system information, a random access configuration used by the UE in the access to the target cell, a security parameter configuration of the UE in the target cell, a radio bearer configuration of the UE in the target cell, a configuration of a timer T304, and the like. For ease of description, in the present invention, a cell change command is equivalent to an RRC message including a cell change command, and refers to an RRC message or a configuration in an RRC message that triggers a UE to perform a cell change. A cell change configuration refers to all or some configurations in the cell change command. "Cancel", "release", "delete", "clear", and "remove" are interchangeable. "Execute", "use", and "apply" are interchangeable. "Configure" and "reconfigure" are interchangeable. "Monitor" and "detect" are interchangeable. A cell change refers to a PSCell change, if not otherwise specified.

The following describes processes or concepts in the prior art to which the present invention relates.

### Cell change configuration in NR system:

In an NR system, an RRCReconfiguration message for a cell change command carries RRC configurations from a target base station, including, but not limited to, the following RRC configurations (see Section 6.2.2 of 3GPP Technical Standard Protocol 38.331 for details):
- A measurement configuration: used to configure intra-frequency, inter-frequency, and inter-radio access technology measurements performed by a UE, for example, a measurement object configuration, a measurement report configuration, a measurement gap configuration, etc.
- A cell group configuration (cellGroupConfig information element), used to configure a secondary cell group, including a Radio Link Control (RLC) bearer configuration (an rlc-bearerToAddModList information element and an rlc-bearerToreleaselist information element), a Medium Access Control (MAC) configuration (a MAC-cellgroupconfig information element), a physical layer configuration, a secondary cell addition/modification/release configuration, a special cell (SpCell) configuration, etc., corresponding to a data radio bearer/signaling radio bearer. The SpCell configuration includes a cell index number, cell change information (reconfigurationWithSync information element), a radio link failure-related timer and constant configuration, a Radio Link Monitoring (RLM) configuration, a special cell-dedicated configuration, etc. The reconfigurationwithsync information element includes cell change-related information such as serving cell configuration common information, a cell radio network temporary identifier (C-RNTI) of the UE in the target cell, configurations of a cell change procedure monitoring timer T304, a random access-dedicated configuration for a random access procedure to the target cell, etc.
- A radio bearer configuration (radiobearerConfig information element), used to configure a Service Data Application Protocol layer (SDAP) and a Packet Data Convergence Protocol layer (PDCP) of a Data Radio Bearer (DRB) and/or a Signaling Radio Bearer (SRB).
- Key update configuration.

### Dual connectivity (DC):

In order to improve the data transmission efficiency of the UE, the UE simultaneously establishes links with two base stations. That is, radio resources used by the UE are provided by different schedulers located in the two base stations. Radio access between the two base stations and the UE may be the same or different Radio Access Technology (RAT). For example, both are NR, or one is NR, and one is LTE, also referred to as evolved universal terrestrial radio access (E-UTRA). In these two base stations, one is referred to as a master node (MN) or an MgNB or an MeNB. A serving cell group under the master node is referred to as a master cell group (MCG). The other is referred to as a secondary node (SN) or an SgNB or an SeNB, and a serving cell group under the secondary node is referred to as a secondary cell group (SCG). When the master node is LTE and the secondary node is NR, DC is referred to as EN-DC (using a 4G core network) or NGEN-DC (using a 5G core network). When the master node and the secondary node are both NR, DC is referred to as NR-DC. An MCG includes one primary cell (PCell) and optionally one or more secondary cells (SCells). The PCell operates on a primary frequency, and the UE performs an initial connection setup procedure or a connection re-establishment procedure via the primary frequency. An SCG includes one primary SCG cell (PSCell) and one or more optional SCells. The PSCell refers to an SCG cell that performs random access when the UE performs a reconfiguration with sync procedure for an SCG. The PCell and the PSCell are also collectively referred to as special cells (SpCells). When DC is configured, a DRB and an SRB for the UE are supported to be configured to be a split bearer. When not configured to be a split SRB, SRB1 and SRB2 are transmitted via an MCG path. Furthermore, when the DC is configured, SRB3 may also be set up for the SN to transmit configurations associated with the SCG between the SN and the UE, etc. Setup and release of SRB3 are both determined by the SN.

### PSCell change procedure in NR system:

A PSCell change may be initiated by an MN or an SN. The MN or the SN may initiate a PSCell change on the basis of a factor such as a measurement result of a source PSCell or a neighboring cell reported by a UE, or the load of a neighboring cell, or the like. In a PSCell change procedure in which the MN participates (no matter whether the PSCell change procedure is initiated by the MN or the SN), a cell change command for a PSCell is included in an RRCReconfiguration message of SRB1 and transmitted to the UE. A PSCell change command is an RRCReconfiguration message for an SCG. When the PSCell change command is transmitted to the UE via an MCG link, the PSCell change command is typically included in an mrdc-SecondaryCellGroupConfig information element or an nr-SecondaryCellGroupConfig information element, and is inserted in an RRCReconfiguration message of SRB 1. If the PSCell change does not require participation of the MN, e.g., an intra-SN PSCell change scenario, then the SN may autonomously generate an RRCReconfiguration message of the PSCell change command, and transmit the same to the UE via SRB3 of an SCG link.

The UE receiving the PSCell change command immediately applies a configuration of the cell change command to perform a PSCell change, including a random access procedure to the PSCell. The UE monitors the cell change procedure via a timer T304. When the cell change procedure is initiated, the UE starts the T304 timer. When the cell change procedure is completed (the random access procedure is successfully completed), the UE stops the timer T304. When T304 expires, the UE considers that the PSCell change has failed or reconfiguration with sync has failed.

### SCG activation/deactivation mechanism

An SCG activation/deactivation mechanism is introduced to Release 17. An entire SCG cell group is activated and deactivated to adapt to a dynamically changing UE traffic volume/traffic rate in the expectation of further reducing power overhead caused by unnecessary uplink and downlink transmission or link monitoring when the UE traffic volume is small.

Both an MN and an SN may request activation or deactivation of the SCG. The MN determines whether to activate or deactivate the SCG, and transmits an SCG activation deactivation command to the UE via an RRC message of SRB1. When an RRC message (e.g., an RRCReconfiguration message) received by the UE from SRB1 includes an scg-State information element, the UE performs an SCG deactivation operation. Otherwise, when the RRC message does not include an scg-State information element, the UE performs an SCG activation operation. During SCG deactivation, the UE performs one or more of the following operations: considering that the SCG is deactivated, resetting MAC of the SCG, indicating to a lower layer of RRC that the SCG is deactivated, and if a radio link monitoring (RLM) and beam failure detection (BFD)-related parameter is not configured (i.e., the BFD-and-RLM information element is not set to true), stopping RLM for the SCG, stopping a timer T310/T312 for the SCG, and so on. During SCG activation, the UE performs one or more of the following operations: considering that the SCG is activated, and if the UE is configured with a deactivated SCG before receiving the activation command, resuming RLM for the SCG, and indicating to a lower layer of RRC that the SCG is activated.

When the MAC layer of the UE receives an SCG deactivation instruction of the RRC layer, all SCells and PSCells of the SCG are deactivated. When in SCG deactivation (when the PSCell is deactivated), the UE does not transmit a sounding reference signal (SRS) on the PSCell of the SCG, does not report channel status information (CSI) for the PSCell of the SCG, does not transmit an uplink-shared channel (UL-SCH) on the PSCell of the SCG, does not trigger random access on the PSCell of the SCG, does not monitor a PDCCH on the PSCell of the SCG, does not monitor a PDCCH for the PSCell of the SCG, and does not transmit a physical uplink control channel (PUCCH) on the PSCell of the SCG. When the MAC layer of the UE receives an SCG activation instruction of the RRC layer, the SCG is activated. When in SCG activation (when the PSCell is activated), the UE allows transmitting an SRS on the PSCell of the SCG, reporting CSI for the PSCell of the SCG, triggering random access on the PSCell of the SCG, monitoring a PDCCH on the PSCell of the SCG, monitoring a PDCCH for the PSCell of the SCG, and allows transmitting a PUCCH on the PSCell of the SCG. In the present invention, SCG activation/deactivation, SCG resume/suspension, and PSCell activation/deactivation are interchangeable. SCG activation/deactivation command is a general name of the SCG activation command and an SCG deactivation command.

### Successful handover report:

Handover information reporting when a handover is successful is introduced in an NR system of Release 17. The handover refers to a PCell change or a reconfiguration with sync of a PCell. A handover command refers to an RRCReconfiguration message including a reconfiguration with sync information element for an MCG. The handover information reporting for a successful handover is also referred to as a successful handover report (SHR) for short. This is because, in an NR system, performing network optimization by relying only on a radio link failure (RLF) report in an existing mechanism may cause a data collection procedure to become lengthened, and handover information reporting, when a handover succeeds, enables the network side to acquire a sufficient number of samples in a mobility procedure more quickly. Second, even for a successful handover scenario, a mobility parameter thereof also needs to be further optimized. Content of an SHR may include one or more of the following: a source cell identifier of a handover; a target cell identifier of the handover; a measurement result of a source cell or a target cell of the handover; a measurement result of a neighbor cell; and an indication indicating a reason that the SHR is triggered (i.e., which triggering condition is satisfied), etc. Success of the handover includes an RRCReconfigurationComplete message for responding to a handover command RRCReconfiguration message with respect to the target base station being successfully transmitted, or a random access procedure to the target base station being successfully completed at a MAC layer. The network side needs to configure, for the UE, information for triggering a successful handover report (e.g., thresholds corresponding to T310, T312, and T304, and radio link failure (RLF) that a source cell undergoes during performing of a dual active protocol stack (DAPS) handover). The UE records handover information of the successful handover only when one or more triggering conditions according to the configured triggering information are satisfied (e.g., when a percentage of an elapsed value of T310 (or T312) of the source cell to a configured value of T310 (or T312) exceeds the configured corresponding threshold when the handover command is received or when the handover is performed; when a percentage of an elapsed value of T304 to a configured value of T304 exceeds the configured corresponding threshold when the handover is successfully completed; and when the source cell undergoes RLF while performing a DAPS handover). The triggering condition related to the source cell, e.g., the T310 threshold or the T312 threshold, is configured for the UE by the source cell, and the triggering condition related to the target cell, e.g., the T304 threshold, is configured for the UE by the target cell. Configurations of these successful handover report triggering conditions are included in successful handover report configurations (e.g., a successHO-config information element). The UE may inform, by using an RRC message, the network side that an available successful handover report (for example, indicated by a successHO-InfoAvailable information element) is present thereon. After receiving the indication, the network side may request, by using an RRC message (for example, indicated by successHO-ReportReq in a UEInformationRequest message), the UE to report the successful handover information report stored thereby. The UE reports the stored successful handover report (successHO-Report in the UEInformationResponse message) to the network side in a response RRC message. The successful handover report stored on the UE may be stored for up to 48 hours. In the present invention, for ease of description, the UE variable for recording an SHR is also referred to as an SHR, and the UE variable for recording an SPCR is also referred to as an SPCR.

As described above, the SHR mechanism for when the PCell handover is performed is standardized in the NR system of Release 17 to further optimize mobility robustness in the handover scenario. However, a study objective in Release 18 is to introduce a PSCell change report (successful PSCell change report, SPCR) in a PSCell change scenario. Information of a successful PSCell change procedure is reported to the network side, so that the network side can optimize and adjust a parameter of the PSCell change, so as to improve mobility robustness of the PSCell. In the present invention, it is assumed that a reporting procedure of the SPCR is similar to that of the SHR. That is, if a UE that has successfully performed a PSCell change procedure determines to generate an SPCR, the UE stores, in a corresponding UE variable, content of the generated SPCR, and indicates, to the network side via an RRC message, that the stored SPCR is present thereon. Upon receiving a request from the network side for instructing the UE to report the SPCR, the UE includes the stored SPCR in an RRC message and reports the same to the network side. In the SHR mechanism of R17, since a handover procedure of the NR system is always accompanied by performing of a random access procedure to a target cell, the UE performs an SHR determination operation upon successfully completing the random access procedure in the handover procedure (a reconfiguration with sync procedure for the MCG). The SHR determination-related operation is to determine, on the basis of triggering information in a configured SHR configuration, whether to record handover information, and determine, according to a triggering cause of the SHR and a handover scenario, which handover information to record in the SHR. Different from the handover scenario, in a PSCell change scenario, if SCG deactivation (the RRC message carrying an scgState information element set to true) is indicated in an SCG change command (i.e., an RRCReconfiguration message including a reconfiguration with sync information element for the SCG), the UE does not initiate a random access procedure to the target cell when performing reconfiguration with sync in the RRC reconfiguration procedure, but determines, only when the SCG is subsequently activated, whether to initiate the random access procedure. Accordingly, whether and when to perform an SPCR determination operation during a PSCell change performed in the case that the SCG is deactivated becomes a matter of concern in the present invention. The method in the present invention is applicable to the case of PSCell addition. That is, the PSCell change may also be PSCell addition. Alternatively, the method in the present invention is applicable to the case of a conditional PSCell addition/change (CPAC), also referred to as conditional reconfiguration for the SCG.

The following embodiments provide a solution to the above problems. If not otherwise specified, the embodiments are not mutually exclusive, and may be combined, or some concepts or definitions are commonly applicable among the embodiments.

### Embodiment 1

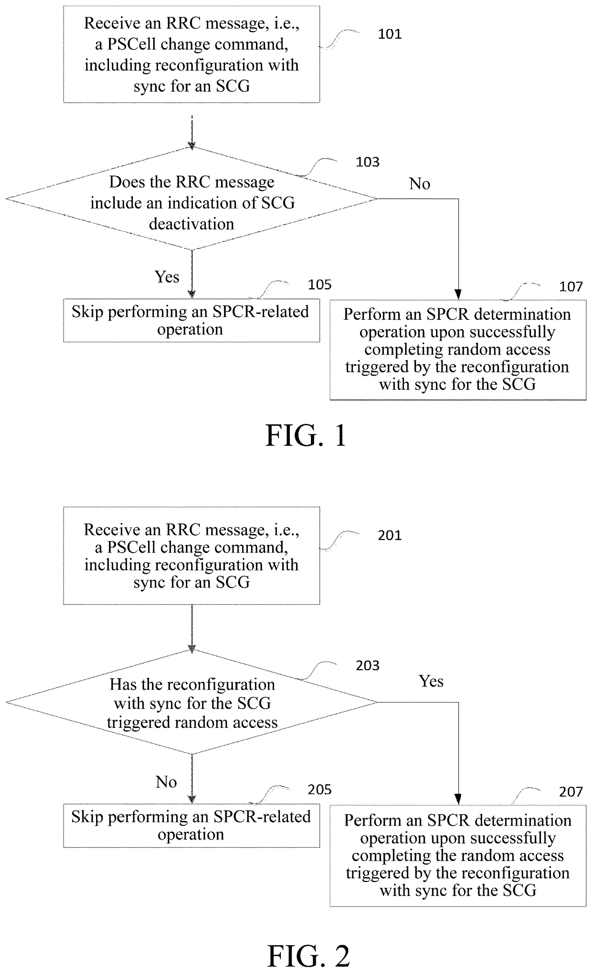

FIG. 1 is a flowchart showing a method performed by a user equipment according to Embodiment 1 of the present invention.

This embodiment provides an SPCR recording method performed on a UE. In this embodiment, if SCG deactivation is indicated in a PSCell change command, the UE skips performing an SPCR determination operation. That is, when a target SCG is set to be deactivated, the UE does not record related SPCR information (i.e., successful PSCell change-related information) for the PSCell change event. In some networks, the network side only wants to acquire SPCR information in a normal SCG operating state, that is, when the SCG is activated, as a basis for optimizing PSCell mobility, and the UE does not need to report SPCR information when the SCG is deactivated. In consideration of this requirement, according to the present embodiment, the UE does not record SPCR information for a PSCell mobility event when the SCG is deactivated, thereby avoiding energy consumption of the UE and air interface signaling overhead caused by unnecessary SPCR recording and reporting.

As shown in FIG. 1, in step 101, an RRC message, i.e., a PSCell change command, including reconfiguration with sync for an SCG is received.

Preferably, the RRC message is an RRCReconfiguration message. The UE performs an RRC reconfiguration procedure by applying a configuration in the RRC message.

Step 103: if the UE is configured with an SPCR configuration, the UE determines whether the RRC message includes an indication of SCG deactivation (e.g., an scg-State information element set to true).

If not, i.e., if the RRC message does not include an indication of SCG deactivation, then in step 107, the UE performs an SPCR determination operation upon successfully completing random access triggered by the reconfiguration with sync for the SCG. If so, i.e., if the RRC message includes the indication of SCG deactivation, then in step 105, the UE skips performing an SPCR-related operation.

Preferably, the UE being configured with the SPCR configuration is the UE being configured with the SPCR configuration when connected to a source PSCell. That is, in step 101 or before step 101, the method further includes: receiving, by the UE, from a network side, an RRC message including the SPCR configuration.

The SPCR configuration refers to a configuration used for the UE to report successful PSCell change information to the network side. Preferably, the SPCR configuration includes a configuration of a triggering condition used for the UE to determine whether to record corresponding successful PSCell change information for a PSCell change, i.e., a configuration of SPCR triggering information. The triggering condition may be, for example, a T310 threshold for the PSCell, a T312 threshold for the PSCell, or a T304 threshold for the SCG. In one means, the threshold is a percentage threshold. For example, the T310 threshold for the PSCell indicates a percentage threshold between an elapsed value of T310 and a configured value of T310 for the PSCell. The T312 threshold for the PSCell indicates a percentage threshold between an elapsed value of T312 and a configured value of T312 for the PSCell. The T304 threshold for the SCG indicates a percentage threshold between an elapsed value of T304 and a configured value of T304 for the SCG. The UE determines, according to the triggering information in the SPCR configuration, whether to record related information of a certain PSCell change procedure in a UE variable corresponding to the SPCR. In the present invention, the triggering information in the SPCR configuration is therefore also referred to as an SPCR triggering condition. When the UE determines that one or more SPCR triggering conditions are satisfied, the UE records corresponding SPCR information in a UE variable related to the SPCR. The SPCR triggering condition being satisfied means that the UE determines that one or more instances of triggering information in the SPCR configuration are satisfied. For example, when the triggering condition is the T310 threshold, the SPCR triggering condition being satisfied means that when the ratio of an elapsed value of T310 of a source PSCell before the UE performs reconfiguration with sync for the PSCell upon receiving a PSCell change command (or when performing of a PSCell change is initiated) to a configured value of T310 exceeds the configured threshold, the UE considers that the SPCR triggering condition is satisfied. When the triggering condition is the T312 threshold, the SPCR triggering condition being satisfied means that when the ratio of an elapsed value of T312 of a source PSCell before the UE performs reconfiguration with sync for the PSCell upon receiving a PSCell change command (or when performing of a PSCell change is initiated) to a configured value of T312 exceeds the configured threshold, the UE considers that the SPCR triggering condition is satisfied. When the triggering condition is the T304 threshold, the SPCR triggering condition being satisfied means that when the ratio of an elapsed value of T304 to a configured value of T304 included in a PSCell change command exceeds the configured threshold, the UE considers that the SPCR triggering condition is satisfied.

The SPCR determination operation means determining, according to the triggering information in the SPCR configuration, whether to record information related to the PSCell change and determining, according to a triggering cause of the SPCR and a PSCell change scenario, which PSCell change-related information (SPCR information) is recorded in the SPCR.

Preferably, the SPCR information includes source PSCell information (e.g., a source PSCell identifier and a source PSCell measurement) of a PSCell change procedure, target PSCell information (e.g., a target PSCell identifier and a target PSCell measurement), a neighboring cell measurement result, a triggering cause of the SPCR, associated PCell information (e.g., a PCell identifier and a PCell measurement), a triggering condition corresponding to the triggering cause/indication information of whether the SPCR configuration is configured by an MN or an SN, etc. The SPCR information recorded by the UE in the UE variable corresponding to the SPCR is not limited in the present invention, and provided here are merely examples.

### Embodiment 2

FIG. 2 is a flowchart showing a method performed by a user equipment according to Embodiment 2 of the present invention.

This embodiment provides an SPCR recording method performed on a UE. In this embodiment, if no random access procedure is triggered in an RRC reconfiguration procedure for a PSCell change (e.g., SCG deactivation is indicated in an RRC message), the UE skips performing an SPCR determination operation. That is, when the UE skips performing a random access procedure to a target PSCell, the UE does not record related SPCR information (i.e., successful PSCell change-related information) for the PSCell change event. This embodiment is a variant embodiment of Embodiment 1 to achieve the same effect as in Embodiment 1.

As shown in FIG. 2, in step 201, an RRC message, i.e., a PSCell change command, including reconfiguration with sync for an SCG is received.

Preferably, the RRC message is an RRCReconfiguration message. The UE performs an RRC reconfiguration procedure by applying a configuration in the RRC message.

In step 203, if the UE is configured with an SPCR configuration, the UE determines whether the reconfiguration with sync for the SCG has triggered random access in this procedure.

If so, i.e., if the reconfiguration with sync for the SCG has triggered random access, then in step 207, the UE performs an SPCR determination operation upon successfully completing the random access triggered by the reconfiguration with sync for the SCG. If not, i.e., if the reconfiguration with sync for the SCG has not triggered random access, then in step 205, the UE skips performing an SPCR-related operation.

Preferably, the UE being configured with the SPCR configuration is the UE being configured with the SPCR configuration when connected to a source PSCell. That is, in step 201 or before step 201, the method further includes: receiving, by the UE, from a network side, an RRC message including the SPCR configuration.

The SPCR configuration is the same as that described in Embodiment 1, and will not be repeated here.

The SPCR determination operation is the same as that described in Embodiment 1, and will not be repeated here.

The SPCR information is the same as that described in Embodiment 1, and will not be repeated here.

### Embodiment 3

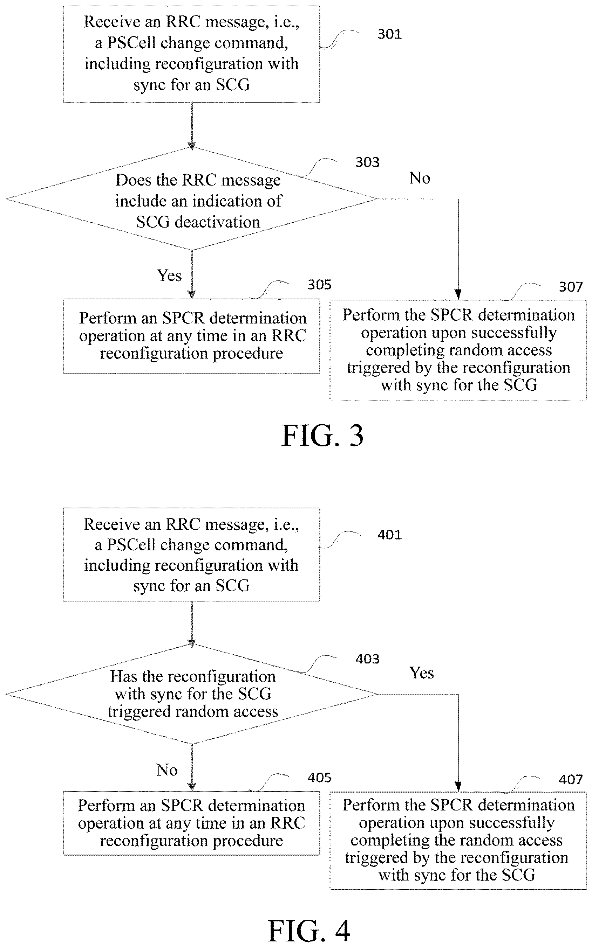

FIG. 3 is a flowchart showing a method performed by a user equipment according to Embodiment 3 of the present invention.

This embodiment provides an SPCR recording method performed on a UE. In this embodiment, the UE determines, on the basis of whether SCG deactivation is indicated in a PSCell change command, when to perform an SPCR determination operation. In some networks, the network side not only wants to acquire SPCR information in a normal SCG operating state, that is, when the SCG is activated, as a basis for optimizing PSCell mobility, but also wants the UE to report SPCR information when the SCG is deactivated so as to optimize PSCell mobility when the SCG is deactivated. In consideration of this requirement, according to the present embodiment, the UE performs the SPCR determination operation at an appropriate time in a PSCell change procedure in which the target PSCell is deactivated, and records information corresponding to the mobility event in a UE variable of the SPCR.

As shown in FIG. 3, in step 301: an RRC message, i.e., a PSCell change command, including reconfiguration with sync for an SCG is received.

Preferably, the RRC message is an RRCReconfiguration message. The UE performs an RRC reconfiguration procedure by applying a configuration in the RRC message.

In step 303, if the UE is configured with an SPCR configuration, the UE determines whether the RRC message includes an indication of SCG deactivation (e.g., an scg-State information element set to true).

If not, i.e., if the RRC message does not include an indication of SCG deactivation, then in step 307, the UE performs an SPCR determination operation upon successfully completing random access triggered by the reconfiguration with sync for the SCG. If so, i.e., if the RRC message includes an indication of SCG deactivation, then, preferably, in step 305, the UE performs the SPCR determination operation at any time in an RRC reconfiguration procedure. Optionally, the UE performs the SPCR determination operation upon completing a reconfiguration with sync procedure (i.e., upon applying a configuration in a reconfiguration with sync information element) or during the reconfiguration with sync procedure. Optionally, the UE performs the SPCR determination operation upon receiving the RRC message in step 301 and determining that the message includes a reconfiguration with sync information element for the SCG. Optionally, the UE performs the SPCR determination operation upon determining that a configuration in the RRC message can be applied (the configuration is able to comply).

Preferably, the UE being configured with the SPCR configuration is the UE being configured with the SPCR configuration when connected to a source PSCell. That is, in step 301 or before step 301, the method further includes: receiving, by the UE, from a network side, an RRC message including the SPCR configuration.

The SPCR configuration is the same as that described in Embodiment 1, and will not be repeated here.

The SPCR determination operation is the same as that described in Embodiment 1, and will not be repeated here.

The SPCR information is the same as that described in Embodiment 1, and will not be repeated here.

### Embodiment 4

FIG. 4 is a flowchart showing a method performed by a user equipment according to Embodiment 4 of the present invention.

This embodiment provides an SPCR recording method performed on a UE. In this embodiment, the UE determines, on the basis of whether a random access procedure is triggered in an RRC reconfiguration procedure for a PSCell change, when to perform an SPCR determination operation. This embodiment is a variant embodiment of Embodiment 3 to achieve the same effect as in Embodiment 3.

As shown in FIG. 4, in step 401: an RRC message, i.e., a PSCell change command, including reconfiguration with sync for an SCG is received.

Preferably, the RRC message is an RRCReconfiguration message. The UE performs an RRC reconfiguration procedure by applying a configuration in the RRC message.

In step 403, if the UE is configured with an SPCR configuration, the UE determines whether the reconfiguration with sync for the SCG has triggered random access in this procedure.

If so, i.e., if the reconfiguration with sync for the SCG has triggered random access, then in step 407, the UE performs an SPCR determination operation upon successfully completing the random access triggered by the reconfiguration with sync for the SCG. If not, i.e., if the reconfiguration with sync for the SCG has not triggered random access, then preferably in step 405, the UE performs the SPCR determination operation at any time in an RRC reconfiguration procedure. Optionally, the UE performs the SPCR determination operation upon completing a reconfiguration with sync procedure (i.e., upon applying a configuration in a reconfiguration with sync information element) or during the reconfiguration with sync procedure. Optionally, the UE performs the SPCR determination operation upon receiving the RRC message in step 401 and determining that the message includes a reconfiguration with sync information element for the SCG. Optionally, the UE performs the SPCR determination operation upon determining that a configuration in the RRC message can be applied (the configuration is able to comply).

Preferably, the UE being configured with the SPCR configuration is the UE being configured with the SPCR configuration when connected to a source PSCell. That is, in step 401 or before step 401, the method further includes: receiving, by the UE, from a network side, an RRC message including the SPCR configuration.

The SPCR configuration is the same as that described in Embodiment 1, and will not be repeated here.

The SPCR determination operation is the same as that described in Embodiment 1, and will not be repeated here.

The SPCR information is the same as that described in Embodiment 1, and will not be repeated here.

### [Variant Embodiment]

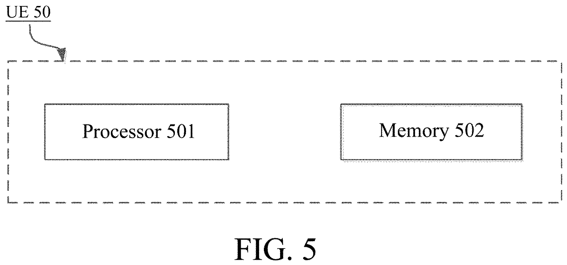

Hereinafter, FIG. 5 is used to illustrate, as a variant embodiment, a user equipment that can perform the method performed by a user equipment described in detail above in the present invention.

FIG. 5 is a block diagram showing a user equipment (UE) according to the present invention.

As shown in FIG. 5, user equipment (UE) 50 includes a processor 501 and a memory 502. The processor 501 may, for example, include a microprocessor, a microcontroller, an embedded processor, or the like. The memory 502 may include, for example, a volatile memory (such as a random access memory (RAM)), a hard disk drive (HDD), a non-volatile memory (such as a flash memory), or other memories, etc. The memory 502 has program instructions stored thereon. The instructions, when run by the processor 501, can perform the above method executed by a user equipment described in detail in the present invention.

The method and related equipment according to the present invention have been described above in combination with preferred embodiments. It should be understood by those skilled in the art that the methods shown above are only exemplary. The method of the present invention is not limited to the steps or sequences illustrated above. The base station and user equipment shown above may include more modules. For example, the base station and user equipment may further include modules that may be developed or will be developed in the future to be applied to a base station, an MME, or UE. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by a user equipment (UE), comprising:
receiving a radio resource control (RRC) message, i.e., a primary secondary cell group cell (PSCell) change command, comprising reconfiguration with sync for a secondary cell group (SCG);
determining whether the RRC message comprises an indication of SCG deactivation; and
if the RRC message does not comprise an indication of SCG deactivation, performing a successful PSCell change report (SPCR) determination operation upon successfully completing random access triggered by the reconfiguration with sync for the SCG.

2. The method according to claim 1, further comprising:
if the RRC message comprises an indication of SCG deactivation, skipping performing an SPCR-related operation.

3. The method according to claim 1, further comprising:
if the RRC message comprises an indication of SCG deactivation, performing the SPCR determination operation at any time in an RRC reconfiguration procedure.

4. A method performed by a user equipment (UE), comprising:
receiving a radio resource control (RRC) message, i.e., a primary secondary cell group cell (PSCell) change command, comprising reconfiguration with sync for a secondary cell group (SCG);
determining whether the reconfiguration with sync for the SCG has triggered random access; and
if the reconfiguration with sync for the SCG has triggered random access, performing a successful PSCell change report (SPCR) determination operation upon successfully completing the random access triggered by the reconfiguration with sync for the SCG.

5. The method according to claim 4, further comprising:
if the reconfiguration with sync for the SCG has not triggered random access, skipping performing an SPCR-related operation.

6. The method according to claim 4, further comprising:
if the reconfiguration with sync for the SCG has not triggered random access, performing the SPCR determination operation at any time in an RRC reconfiguration procedure.

7. The method according to any one of claims 1 to 5, wherein
during or before the reception of the PSCell change command, the method further comprises:
receiving, from a network side, an RRC message comprising an SPCR configuration.

8. The method according to claim 7, further comprising:
when it is determined that one or more SPCR triggering conditions are satisfied, recording corresponding SPCR information in a UE variable related to an SPCR.

9. The method according to claim 8, wherein
the SPCR information comprises at least one of the following: source PSCell information of a PSCell change procedure, target PSCell information, a neighboring cell measurement result, a triggering cause of the SPCR, associated primary cell (PCell) information, a triggering condition corresponding to the triggering cause, and indication information indicating whether the SPCR configuration is configured by a master node (MN) or a secondary node (SN).

10. A user equipment, comprising:
a processor; and
a memory, having instructions stored therein,
wherein the instructions, when run by the processor, perform the method according to any one of claims 1 to 9.
